**Europäisches Patentamt**

**European Patent Office**

**Office européen des brevets**

(19)

(11) Veröffentlichungsnummer: **0 036 214**
**B1**

(12) **EUROPÄISCHE PATENTSCHRIFT**

(45) Veröffentlichungstag der Patentschrift:
11.09.85

(51) Int. Cl.⁴: **G 21 C 3/62**

(21) Anmeldenummer: **81102017.1**

(22) Anmeldetag: **18.03.81**

(54) **Verfahren zur Herstellung salpetersäurelöslicher Mischoxidkernbrennstofftabletten.**

(30) Priorität: **19.03.80 DE 3010547**
**10.03.81 DE 3109067**

(43) Veröffentlichungstag der Anmeldung:
**23.09.81 Patentblatt 81/38**

(45) Bekanntmachung des Hinweises auf die Patenterteilung:
**11.09.85 Patentblatt 85/37**

(84) Benannte Vertragsstaaten:
**AT BE CH DE FR GB IT LI SE**

(56) Entgegenhaltungen:
**DE - A - 1 905 764**
**DE - A - 2 640 102**
**DE - A - 2 833 054**
**GB - A - 1 148 478**
**US - A - 3 051 566**

**ATOMKERNENERGIE, Band 36, Nr. 4, 1980, Selten
253-258 München, DE. H. FUNKE et al.:
"Weiterentwicklung des oxidischen Brennstoffes zum
Schnellbrütereinsatz"**

(73) Patentinhaber: **ALKEM GMBH, Postfach 110069,
D-6450 Hanau 11 (DE)**

(72) Erfinder: **Funke, Peter, Dr., Wildaustrasse 18,
D-6450 Hanau 9 (DE)**
Erfinder: **Hanus, Dietmar, Dr., Frohsinnstrasse 6,
D-8755 Alzenau (DE)**
Erfinder: **Löb, Rainer, Mömlingtalring 25,
D-8753 Obernburg (DE)**
Erfinder: **Könlgs, Wilhelm, Albert-Einstein-Strasse 1,
D-6458 Rodenbach 1 (DE)**

(74) Vertreter: **Mehl, Ernst, Dipl.-Ing. et al, Postfach 22 01 76,
D-8000 München 22 (DE)**

## Beschreibung

Die vorliegende Erfindung betrifft ein Verfahren zur Herstellung salpetersäurelöslicher Mischoxidkernbrennstofftabletten aus Urandioxid ($UO_{2+x}$) und Plutoniumdioxid ($PuO_2$) durch Mahlen der Pulvermischung mit einem $PuO_2$-Gehalt bis 50% in Mühlen innerhalb von Handschuhboxen und anschließendem Granulieren, Pressen und Sintern. Die Forderung nach der Löslichkeit von Kernbrennstofftabletten ergibt sich aus der Notwendigkeit der Wiederaufarbeitung abgebrannter Kernbrennstoffe und der damit verbundenen Zurückgewinnung wertvollster Rohstoffe. Diese Forderung ist an sich nicht neu, es sei dazu nur auf die deutsche Offenlegungsschrift DE-A-2 833 054 verwiesen. Nach dem dort vorgeschlagenen Verfahren wird die Mischkristallbildung — als Voraussetzung für die Löslichkeit — durch wiederholtes Mahlen des radiotoxischen Materials erreicht. Abgesehen von der damit verbundenen erhöhten Strahlenbelastung des Bedienungspersonals, die sich auch beim Arbeiten mit sogenannten abgeschirmten Handschuhkästen nicht ganz vermeiden läßt, ist dieses Verfahren relativ aufwendig. Dabei ist insbesondere auch der Staubanfall beim Mahlen oder beim Entleeren der Mühlen von Nachteil, da sich dieser in den abgeschlossenen Handschuhkästen auf allen Oberflächen ablagert und damit wieder durch Dekontamination beseitigt werden muß.

Es stellte sich daher die Aufgabe, ein Verfahren zur Herstellung von Mischoxidkernbrennstoffen zu finden, das wesentlich einfacher ist und bei dem die mit der Stauban- und -ablagerung verbundenen Nachteile weitestgehend vermieden werden können.

Diese Aufgabe wird erfindungsgemäß dadurch gelöst, daß den Ausgangsmaterialien vor dem Mahlen als halogenfreie Mahlhilfsmittel Wasser, Polyalkohole, vorzugsweise Propandiol, Fettsäuren oder Amine zugeführt werden, die durch anschließende Trocknungsvorgänge oder Temperaturbehandlungen (Sintern) wieder austreibbar sind, und der Mahlvorgang so gesteuert wird, daß eine Primärkorngröße von $< 2\,\mu m$ erreicht wird.

Mit einem solchen Mahlhilfsmittel ist die notwendige Kornfeinheit in einem Arbeitsgang erreichbar, so daß zunächst die Staubbildung und damit die eingangs geschilderten Unannehmlichkeiten weitgehend reduziert werden. Die Stoffauswahl muß dabei so getroffen werden, daß keine unerwünschten Reststoffe in den Kernbrennstofftabletten verbleiben — insbesondere sei hier auf Fluor hingewiesen. Für die Ausbildung der Mischkristalle, die in Salpetersäure löslich sind, ist dabei eine Primärkorngröße der Urandioxid- bzw. Plutoniumdioxidpulver von $< 2\,\mu m$ notwendig. Dies wird durch Verfahrensparameter wie Mahldauer, Füllgrad der Mühlen sowie Mühlentyp eingestellt.

Es lassen sich so beliebige gewünschte Mischungsverhältnisse Pu/U einstellen. Die Weiterverarbeitung zu Kernbrennstofftabletten erfolgt in üblicher Weise durch Pressen, Granulieren und Sintern bei etwa 1700° C.

Die einfache Mischungsmöglichkeit von Pulvern ergibt aber auch noch den Vorteil, zunächst eine Pulvermischung mit einem höheren Plutoniumgehalt, als normalerweise benötigt, herzustellen und zu lagern und gleichzeitig einen Vorrat von Urandioxidpulver bereitzuhalten, durch entsprechendes Mischen beider Pulversorten können dann Mischoxidkernbrennstoffe jeweils gewünschten Plutoniumgehaltes kurzfristig hergestellt werden. Da bereits die Ausgangspulver miteinander gemischt werden und nicht erst die Granulate, wird auf diese Weise die gewünschte homogene Verteilung von Plutonium im Kernbrennstoff erzielt.

Dieses neue Verfahren kann unter weitgehender Vermeidung von Staubbildung unter Plutonium-Handschuhkastenbedingungen durchgeführt werden. Die Mühlen müssen nicht notwendigerweise gereinigt werden, wenn der Plutonium- oder Spaltstoffgehalt der Pulvermischung geändert werden muß. Die exakte Einstellung des Plutonium- bzw. Urangehaltes braucht erst kurz vor dem Pressen der Kernbrennstofftabletten vorgenommen zu werden. Das verwendete Mahlhilfsmittel sorgt dabei auch dafür, daß das Mahlgut nicht an den Wänden des Mahlbehälters oder der Kugeln anhaftet. Dadurch wird der Austrag des Mahlgutes aus den Mahlbehältern sowie das Reinigen derselben erleichtert. Ganz besonders wichtig ist aber dabei auch, daß mit Hilfe dieser Mahlhilfsmittel auch sehr hohe Kornfeinheiten erzielbar sind, was im Hinblick auf die Ausbildung der gewünschten Mischkristalle, deren Löslichkeit in Salpetersäure von ausschlaggebender Bedeutung ist.

Als Mahlhilfsmittel haben sich als organische Substanzen Polyalkohole oder Amine bewährt. Auch Wasser könnte verwendet werden. In diesem Falle ist jedoch zu beachten, daß aufgrund der moderierenden Eigenschaften die Gefahr einer Kritikalität der Pulvermischung berücksichtigt werden muß. Dies bedeutet, daß die zu verarbeitende Pulvermenge entsprechend mengenmäßig eingeschränkt werden muß und außerdem die verwendeten Gefäße und Mühlen Volumina aufweisen, die von vornherein die Möglichkeit des Auftretens einer kritischen Anordnung ausschließen.

Zur weiteren Erläuterung dieses Verfahrens seien nun abschließend drei Ausführungsbeispiele näher beschrieben:

## Beispiel 1

$UO_2$-Pulver und $PuO_2$-Pulver werden im Verhältnis von 4 : 1 Gewichtsteilen und einer Menge von 500 g in eine Mühle eingewogen. Der Pulvermischung werden 200 g Wasser zugegeben, was einem Wasseranteil von ca. 30% entspricht; diese Wassermenge ist jedoch problematisch im Hinblick auf Kritikalitätsprobleme mit den Spaltstoffen Uran 235 und Plutonium. Lediglich wenn die gesamte Spaltstoffmenge sehr klein gehalten wird, wie in diesem Beispiel, oder wenn kritikalitätssichere Geometrien (z. B. Durchmesser der Mühle) eingehalten werden, sind keine Schwierigkeiten zu erwarten. Die Pulvermenge wird in der Mühle über 12 Stunden gemahlen. Nach dem Mahlen wird das Mahlgut im Trockenschrank oder unter Vakuum getrocknet. Anschließend daran erfolgt das Granulieren und Verpressen der Pulver zu Tabletten und das Sintern bei 1700°C unter Inertgas/Wasserstoff-Gemischen.

Die folgende Tabelle zeigt einige charakteristische Daten solcher Pulvermischungen.

| | Pulverdaten Rütteldichte g/cm³ | Tablettendaten Sinterdichte g/cm³ | Löslichkeit des Pu-Anteils in HNO₃% |
|---|---|---|---|
| Pulvermischung ungemahlen | 3,0 | 10,3 | 67,3 |
| Pulvermischung mit Wasserzusatz gemahlen | 2,9 | 10,5 | 99,6 |

Beispiel 2

UO₂-Pulver und PuO₂-Pulver werden im Verhältnis von 7 : 3 Gewichtsteilen und einer Gesamtmenge von 500 g in eine Mühle eingewogen. Der Pulvermischung werden 0,5 g eines Polyalkohols, z. B. Propandiol, zugegeben, was einem Gewichtsanteil von 0,1% entspricht.

Im Hinblick auf die im Beispiel 1 angesprochenen Kritikalitätsprobleme mit den Spaltstoffen Uran 235 und Plutonium sind in diesem Fall überhaupt keine Probleme zu erwarten, da das Verhältnis der Zahl der Wasserstoffatome zur Zahl der spaltbaren Atome weit unter dem kritischen Wert von 1 liegt. Dadurch ist in diesem Fall keine Einschränkung der geometrischen Daten der Mühle vorzusehen.

Die Pulvermischung wird mit dem organischen Mahlhilfsmittel zusammen über 12 Stunden gemahlen. Das gemahlene Pulver wird granuliert, zu Tabletten gepreßt und bei 1700°C unter Inertgas/Wasserstoff-Gemischen gesintert.

Die folgende Tabelle zeigt charakteristische Daten einer so verarbeiteten UO₂/PuO₂-Mischung.

| Pulverdaten Rütteldichte g/cm³ | Tablettendaten Sinterdichte g/cm³ | Löslichkeit des Pu-Anteils in HNO₃% |
|---|---|---|
| 3,7 | 10,5 | 99,9 |

Beispiel 3

Eine Pulvermischung aus UO₂ und PuO₂ mit einem Anteil von 30% Plutonium wird, wie im Beispiel 2 beschrieben, in eine Mühle eingebracht, mit 0,1% organischem Mahlhilfsmittel versetzt und über 12 Stunden gemahlen. Anschließend wird die Mühle geleert, das Pulver wird auf seinen Plutonium-Gehalt hin untersucht und dann auf ein Zwischenlager verbracht. Nach der Zwischenlagerung soll mit dem Pulver ein Kernbrennstoff für Leichtwasserreaktoren mit einem Plutoniumgehalt von 3% hergestellt werden. Dazu wird die berechnete Menge des plutoniumhaltigen gemahlenen Pulves dem Lager entnommen und mit der berechneten Menge an UO₂-Pulver in einem Intensiv-Mischer gemischt.

Die erhaltene Pulvermischung wird auf die homogene Verteilung des Plutoniums und den vorgegebenen Plutoniumgehalt hin geprüft. Liegen diese Daten im vorgegebenen Bereich, wird die Pulvermischung granuliert (entweder trockene oder nasse Verfahren), zu Tabletten der gewünschten Form verpreßt und z. B. bei 1700°C gesintert. Die Verteilung des Plutoniums in solchen Tabletten ist, in Abhängigkeit von der Intensität des Mischvorganges, ausreichend homogen und entspricht in wesentlich besserer Weise den reaktorphysikalischen Notwendigkeiten, als dis der Fall wäre, wenn der gleiche Ablauf statt mit den feinkörnigen Pulvern mit grobkörnigerem Granulat erfolgen würde. Die Löslichkeit solcher Tabletten in Salpetersäure entspricht jener, die auch in Beispiel 2 gefunden wurde.

Diese Beispiele zeigen, daß es im Vergleich zum Stande der Technik mit Hilfe dieses einfachen Verfahrens möglich ist, die gewünschte Löslichkeit von Mischoxidkernbrennstoffen zu erreichen.

Es ist günstig, wenn die gemahlene Pulvermischung als Schüttung in einem rotierenden Behälter durch Aufbaugranulation granuliert wird.

Als rotierende Behälter sind z. B. die in Abb. 1 auf Seite 149 der Zeitschrift für Werkstofftechnik/ Journal of Materials Technologie, 4. Jahrg., Heft 3 (1973) dargestellten Behälter geeignet, also z. B. Granulierhohlzylinder oder Granulierteller, die eine Rotationsbewegung mit einer horizontalen, geneigten, taumelnden oder kreisenden Rotationsachse durchführen und die innerhalb einer Handschuhbox betrieben werden können. Da sich die Form des Granulierbehälters als nicht bedeutsam erwiesen hat, können auch anders geformte Behälter, also z. B. Hohlkugeln oder konische Behälter zum Granulieren verwendet werden.

Bei Verwendung solcher Granulierbehälter, die günstigerweise beim Granulieren verschlossen sind, ist die Staubentwicklung gering, verglichen mit der Staubentwicklung, die beim üblichen Granulieren durch Vorkompaktieren der Pulvermischung in einer Presse und nachfolgendes Brechen des Preßgutes auftreten würde und die über längere Zeit zu erheblicher Strahlenbelastung in den Handschuhkästen führen kann.

Nach einer Granulierdauer von etwa 120 Minuten in einem rotierenden Granulierbehälter entsteht aus der gemahlenen, gegebenenfalls getrockneten Pulvermischung ein gut rieselfähiges, homogenes, gut verarbeitungsfähiges und sinterfähiges Aufbaugranulat. Zur Erleichterung der Bildung dieses Granulates können der gemahlenen Pulvermischung (Mahlgut) vor dem Granulieren feine Agglomerationskeime zugefügt werden, die aus gesintertem Uran-Plutonium-Mischoxid bestehen. Diese Keime können aus Rücklaufpulver hergestellt sein, das aus vorangehenden Fertigungen von Mischoxid-Kernbrennstofftabletten stammt. Der Zusatz eines Bindemittels zur gemahlenen Pulvermischung vor dem Granulieren ist nicht erforderlich.

Die Drahzahl des Granulierbehälters kann 10−70% der kritischen Drehzahl betragen, bei der die Pulverschüttung aufgrund der Zentrifugalkraft an der Innenwand des rotierenden Granulierbehälters anzuliegen beginnt. Der Füllgrad des Granulierbehälters ist kleiner oder höchstens gleich 80% des Volumens des Granulierbehälters.

Ausgehend von gegebenfalls zugemischten Agglomerationskeimen lassen sich so kugelförmige Granulate mit einem mittleren Durchmesser kleiner als 300 Mikrometer erzeugen. Der maximale Durchmesser der Granulate beträgt etwa 1 mm. Der zur Staubildung neigende Feinstanteil des Granulates ist ganz erheblich geringer als bei Granulaten, die durch Kompaktieren und nachfolgendes Brechen hergestellt werden. Granulate der letzteren Herstellungsart haben ein breites Kornspektrum mit hohem staubendem Feinstkornanteil.

Das nach dem erfindungsgemäßen Verfahren hergestellte Aufbaugranulat kann ohne Preßhilfsmittel, z. B. Zinkstearat, auf einer Presse direkt zu Brennstofftabletten mit vorgegebenen Abmessungen verdichtet werden. Diese Tabletten werden abschließend, wie bereits erwähnt, in reduzierender Atmosphäre bei ca. 1700° C gesintert.

## Patentansprüche

1. Verfahren zur Herstellung salpetersäurelöslicher Mischoxidkernbrennstofftabletten aus Urandioxid ($UO_{2+x}$) und Plutoniumdioxid ($PuO_2$) durch Mahlen der Pulvermischung mit einem $PuO_2$-Gehalt bis 50% in Mühlen innerhalb von Handschuhboxen und anschließendem Granulieren, Pressen und Sintern, dadurch gekennzeichnet, daß dem Ausgangsmaterial vor dem Mahlen als halogenfreie Mahlhilfsmittel Wasser, Polyalkohole, vorzugsweise Propandiol, Fettsäuren oder Amine zugefügt werden, die durch anschließende Trocknungsvorgänge oder Temperaturbehandlungen (Sintern) wieder austreibbar sind, und der Mahlvorgang so gesteuert wird, daß eine Primärkorngröße von kleiner 2 Mikrometer erreicht wird.

2. Verfahren nach Anspruch 1, dadurch gekennzeichnet, daß die gemahlene Pulvermischung als Schüttung in einem rotierenden Behälter granuliert wird.

3. Verfahren nach Anspruch 2, dadurch gekennzeichnet, daß der gemahlenen Pulvermischung Agglomerationskeime zugefügt werden, die aus gesintertem Uran-Plutonium-Mischoxid bestehen.

## Claims

1. A process for the manufacture of mixed oxide nuclear fuel pellets which are soluble in nitric acid and consist of uranium dioxide ($UO_{2+x}$) and plutonium dioxide ($PuO_2$), by grinding the powder mixture with a $PuO_2$-content of up to 50% in mills inside glove boxes and subsequent granulating, pressing and sintering, characterised in that prior to grinding, the starting material is supplied with water, polyalcohols, preferably propanediol, fatty acids, or amines, as halogen-free auxiliary grinding agents which can be expelled by subsequent drying steps or heat treatments (sintering), and the grinding step

**0 036 214**

is controlled in such a way that a primary grain size of less than 2 micrometres is obtained.

2. A process as claimed in Claim 1, characterised in that the ground powder mixture is granulated as a charge in a rotating container.

3. A process as claimed in Claim 2, characterised in that agglomeration seeds consisting of sintered uranium-plutonium mixed oxide, are added to the ground powder mixture.

## Revendications

1. Procédé de fabrication de pastilles de matière combustible nucléaire en oxyde mixte, solubles dans l'acide nitrique, à partir de dioxyde d'uranium ($UO_{2+x}$) et de dioxyde de plutonium ($PuO_2$), par broyage du mélange de poudres ayant une teneur en $PuO_2$ allant jusqu'à 50% dans des broyeurs à l'intérieur de boîtes à gants et ensuite par granulation, par compression et par frittage, caractérisé en ce qu'il consiste à ajouter à la matière de départ avant le broyage, à titre d'adjuvant de broyage exempt d'halogène, de l'eau, des polyalcools de préférence du propanediol des acides gras ou des amines, qui peuvent être réextraits par des processus de séchage ou par des traitements en température (frittage) subséquents, et à conduire le processus de broyage de manière à parvenir à une granulométrie primaire inférieure à 2 $\mu$m.

2. Procédé suivant la revendication 1, caractérisé en ce qu'il consiste à granuler le mélange de poudres broyé en vrac dans un récipient tournant.

3. Procédé suivant la revendication 2, caractérisé en ce qu'il consiste à ajouter au mélange de poudres broyé des germes d'agglomération constituées d'un oxyde mixte d'uranium et de plutonium fritté.

5